# EUROPEAN PATENT SPECIFICATION

(11) **EP 0 242 869 B1**
(45) Date of publication and mention of the grant of the patent: **10.08.1994**
(21) Application number: 87105903.6
(22) Date of filing: 22.04.1987
(51) Int. Cl.: G05B 19/18

(54) **Numerical control equipment**
Numerische Steuerungseinrichtung
Installation pour commande numérique

(30) Priority: 22.04.1986 JP 91197/86
(43) Date of publication of application: 28.10.1987
(73) Proprietor: MITSUBISHI DENKI KABUSHIKI KAISHA, Tokyo 100 (JP)
(72) Inventor: Hirai, Hayao c/o Mitsubishi Denki Kabushiki Kaisha, Higashi-ku Nagoya-shi Aichi (JP)
(74) Representative: Lehn, Werner, Dipl.-Ing.

(56) References cited:
- FR-A- 2 548 402
- GB-A- 1 211 418
- US-A- 3 135 055
- US-A- 3 250 012
- US-A- 3 605 909
- US-A- 4 287 558
- PATENT ABSTRACTS OF JAPAN, vol. 10, no. 60 (P-435)[2117], 11th March 1986;& JP-A-60 204 005 (MATSUSHITA DENKI SANGYO K.K.) 15-10-1985
- PROCEEDINGS OF 17TH NUMERICAL CONTROL SOCIETY ANNUAL MEETING & TECHNICAL CONFERENCE, Hartford, 27th-30th April 1980, pages 329-341; C. LAZZARETTI: "Computer aided inspection system"
- PATENT ABSTRACTS OF JAPAN, vol. 7, no. 283 (M-263)[1428], 16th December 1983;& JP-A-58 160 046 (SHINWA SYSTEM DENSHI K.K.) 22-09-1983

## Description

### BACKGROUND OF THE INVENTION

This invention relates to a numerical control equipment for a machine tool with measuring devices such as a tool measuring device, tool presetting device and workpiece measuring device, and more particularly to a numerical control equipment which performs measurement with high accuracy by using a measuring head based on the principle of an electrical micro-measurement.

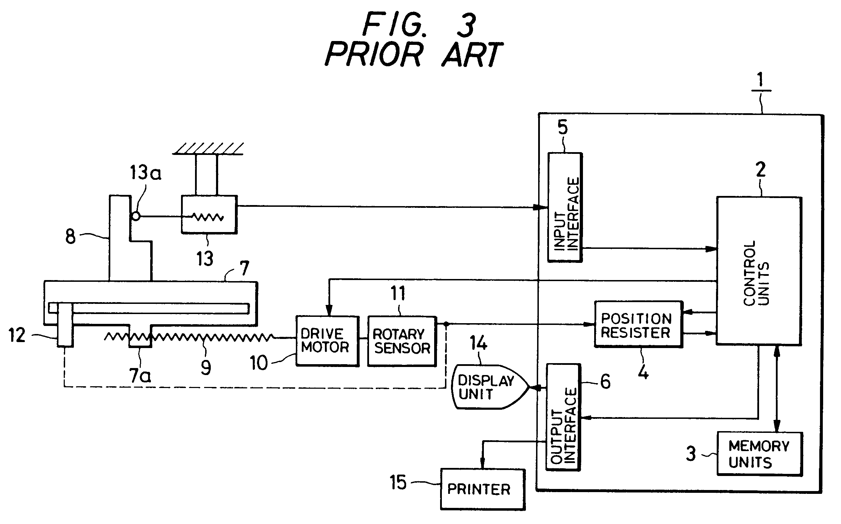

FIG. 3 is a diagram outlining the arrangement of a conventional numerical control equipment with measuring devices. In FIG. 3, reference numeral 1 designates a numerical control equipment body which comprises a control section 2, memory units 3, a position register 4, an input interface 5, and an output interface 6.

Further in FIG. 3, reference numeral 7 designates a table on which an object 8 under measurement is placed; 9, a threaded bar engaged with a threaded hole which is formed in a protrusion 7a extended downwardly from the table 7; 10, a drive motor for rotating the threaded bar 9 to move the table 7; 11, a rotary sensor coupled to the drive motor 10, the output of the sensor 11 being applied to the position register 4; 12, a linear sensor provided on the table 7, the linear sensor 12 being used in place of the rotary sensor 11 when necessary; 13, a touch sensor fixed in position, the output of the touch sensor 13 being supplied through the input interface 5 to the control units 2; 14, a display unit connected to the output interface 6; and 15, a printer connected to the output interface 6.

The operation of the conventional numerical control equipment thus constructed will be described.

The movement of the object to a theoretical position is controlled as follows: While the table 7 is being moved by driving the motor 10 based on the instruction from the control units 2, the output of the rotary sensor 11 (or the linear sensor 12) is feedback to the position register 4.

In the movement of the table 7, the speed of the table 7 is decreased to an extremely low value, namely, a measuring speed when the table reaches the position several millimeters away from the theoretical position, thus providing a measuring gap.

On the other hand, when the contactor13a of the touch sensor 13 fixed at the predetermined position touches the object 8, the touch sensor 13 outputs a touch signal, which is applied through the input interface 5, as an interrupt signal, to the control units 2.

The control units 2 carries out controls with interrupt signal intervals. If the interrupt signal reaches the control units 2 during an interrupt signal interval, it is not received by the control units 2. When the end of the interrupt signal interval occurs with the lapse of time, the interrupt signal is received, so that the counting operation of the position register 4 is stopped.

These results are operated by the control units 2 with respect to the mutual relation between the present position and the theoretical position (or command position or target position), and a tool correction value, a tool preset value, a workpiece measurement value, errors etc. are applied through the output interface 6 to the display unit 14 and the printer 15.

Disadvantages of the above-described conventional equipment will be described by using numerical data. For instance in the case where the interruption signal interval is 2.2 msec, and the position fluctuation is 0.5 µm, the measuring speed must be 13.336 mm/min (or 0.227 mm/sec) or less.

If the measuring gap is 0.227 mm, then the measuring movement time is at least one second.

The conventional numerical control equipment is designed as described above. Therefore, in order to maintain high precision in view of the interrupt signal intervals and the moving speeds, the extremely low speed feeding or the decrease of the interrupt signal intervals is required. However, the interrupt signal intervals cannot be changed with ease, being substantially determined by the hardware employed. Therefore, the measurement should be carried out with the moving speed changed to the extremely low speed. This means an increase of the measuring time. Therefore, it takes a relatively long period of time to measure a number of points.

### SUMMARY OF THE INVENTION

An object of this invention is to eliminate the above-described difficulties accompanying a conventional numerical control equipment. More specifically, an object of the invention is to provide a numerical control equipment in which process is made to include the measurement time in the positioning time, and the positional error depends only on the accuracy and repeatability of the measuring head employed.

The object of the present invention is solved by a numerical control equipment, comprising: a table for holding an object to be measured; drive means for driving said table; control means for providing movement instructions to said drive means in order to move said object on said table to a target position; a position sensor for detecting the position of said table; a position register for receiving a detection signal from said position sensor; measuring means including a measuring head fixed at a reference position for measuring the difference between the stop position of said object and said reference position, as said object is moved to said target position and for outputting a digital signal based thereon; and memory means for storing the output of said measuring means as first data and other data relating to numerical control operations; said control means receiving said first data from said memory means and a digital output signal of said position register and calculating a positional error of said object as the difference between said target position and said stop position calculated from the output of said measuring means stored in said memory means and the contents of said position register, and controlling said memory means to re-write the other data in said memory means in accordance with the positional error of said object calculated.

In an alternative embodiment, the object is held stationary at a reference position and the measuring head is moved.

### BRIEF DESCRIPTION OF THE DRAWINGS

FIG. 1 is an explanatory diagram, partly as a block diagram, showing a first example of a numerical control equipment according to this invention;
FIG. 2 is an explanatory diagram, partly as a block diagram, showing a second example of the numerical control equipment according to the invention; and
FIG. 3 is also an explanatory diagram, partly as a block diagram, showing one example of a conventional numerical control equipment.

### DETAILED DESCRIPTION OF THE PREFERRED EMBODIMENTS

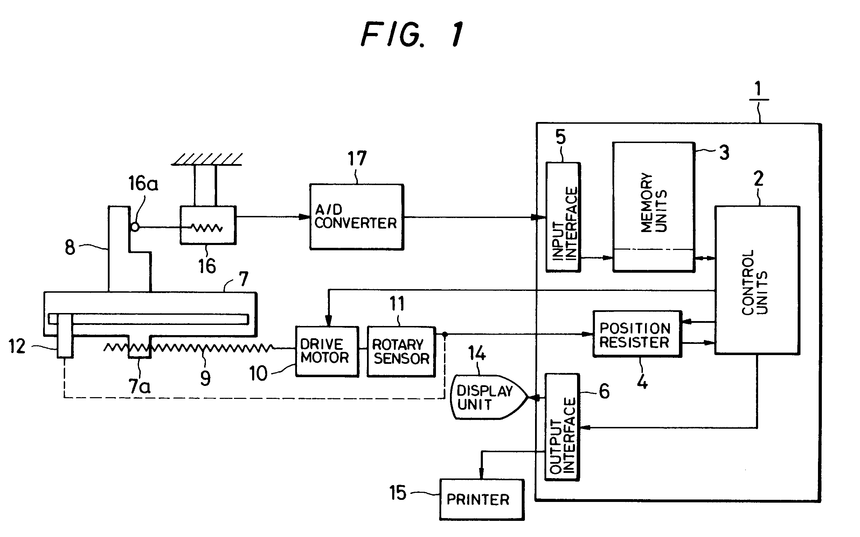

A first embodiment of this invention will be described with reference to FIG. 1. In FIG. 1, those components which have been already described with reference to FIG. 3 are therefore designated by the same reference numerals. In FIG. 1, reference numeral 16 designates a measuring head employing the principle of an electrical micro-measurement; and 17, an analog-to-digital converter for converting an analog output of the measuring head 16 into a digital signal (hereinafter referred to as "an A/D converter 17", when applicable). The memory units 3 in the numerical control equipment body 1, unlike the memory units in FIG. 3, is provided between the control units 2 and the input interface 5.

The operation of the numerical control equipment thus constructed will be described. The drive motor 10 is operated by the output of the control units 2, so that the table 7 is moved to the theoretical position of the object 8 under measurement. The position of the table is detected by the rotary sensor 11 or the linear sensor 12, and the output signal of the sensor is feedback to the position register 4 so as to stop the table in position.

In this operation, the contactor 16a of the measuring head 16 is moved by touching the object 8. As a result, the measurging head 16 fixed at the reference position outputs an analog voltage according to the movement of the contactor from the reference position. The analog voltage is converted into a digital signal by the A/D converter 17, which is stored in the memory units 3 through the input interface 5.

At this time instant, the measurement position measured by the measuring head 16 and stored in the memory units 3 is added to the present position (the content of the position register) of the table 7 which has been stored in the control units 2, and the difference between the result of the addition and the theoretical position of the object 8 is obtained.

The difference is obtained from the following equation:

$\text{Difference = Theoretical Position - (Present Position + Measurement position)}$

The difference, present position, and theoretical position are applied through the output interface 6 to the display unit 14 so as to be displayed on the latter 14, and, when necessary, to the printer 15.

Arithmetic operations are carried out by using the difference or differences obtained as a result of the measurement, to perform setting and correcting operations such as a tool correcting operation, program correcting operation, original point offsetting operation, tool presetting operation, original point setting operation, workpiece centering operation, and measuring operation, and to change the contents of the addresses provided separately according to functions and uses in the memory units. The contents thus changed may be applied to the display unit 14 and the printer 15.

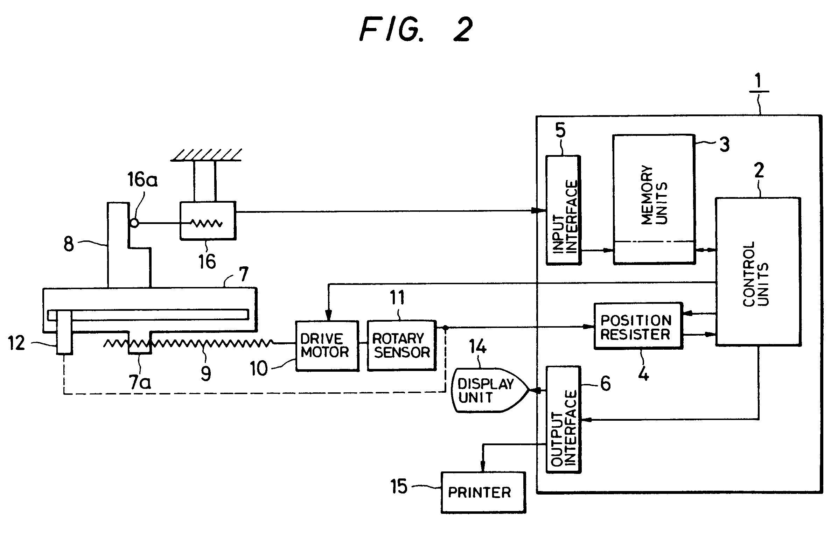

FIG. 2 shows a second embodiment of the invention. In the second embodiment, its measuring head 16 is one which provides digital outputs. Therefore, in the second embodiment, unlike the first embodiment of FIG. 1, it is unnecessary to use the A/D converter.

In the first and second embodiments, the measuring head 16 is fixed at the predetermined position. However, the numerical control equipment may be so modified that the object under measurement is fixed at the predetermined position while the measuring head 16 is moved.

In the first embodiment of FIG. 1, the A/D converter 17 may be built in the numerical control equipment body 1.

In each of the first and second embodiments, the measurement is carried out in a single axis; however, simultaneous measurements in double or tripple axies may be carried out according to the invention. The measuring head may be a non-touch type measuring head such as a distance sensor utilizing electromagnetic induction as well as a contact type measuring head comprising a potentiometer provided in a dial indicator.

As is described above, according to the invention, when an object under measurement is positioned at the theoretical position, simultaneously the difference between the stop position of the object and the reference position is measured with the measuring head, and with the result of arithmetic operation of the measurement position and the stop position as a measurement result, the contents of the addresses provided separately according to functions and uses in the memory units are changed. Therefore, with the numerical control equipment of the invention, the positioning operation and the measuring operation can be achieved within the same period of time, and the arithmetic operation can be carried out immediately, and, if necessary, accomplished during the movement to the next measuring point.

In the numerical control equipment of the invention, unlike the conventional one employing the touch sensor, the extremely low speed feeding operation during the measurement is eliminated. Therefore, in the method of the invention, the measuring time per measuring point can be made shorter at least one second than that in the conventional method using the touch sensor.

In the system employed by the numerical control equipment of the invention, unlike the conventional system in which the interrupt signal is produced and stored during the movement, the present position and the error are read directly after the positioning operation. Therefore, the NC equipment of the invention is completely free from the measurement error fluctuation caused by the movement due to the time delay; that is, the positioning accuracy and the measuring head accuracy are the measurement error directly. Accordingly, by using the high accuracy positioning and the high accuracy measuring head, the high-accuracy and high-speed measurment, with the error, for instance, in a dispersion of 0.1 µm can be achieved according to the invention.

## Claims

1. A numerical control equipment, comprising:
a table (7) for holding an object (8) to be measured;
drive means (10) for driving said table (7);
control means (2) for providing movement instructions to said drive means (10) in order to move said object (8) on said table (7) to a target position;
a position sensor (11,12) for detecting the position of said table (7); and
a position register (4) for receiving a detection signal from said position sensor (11,12);
measuring means (16,17) including a measuring head (16) fixed at a reference position for measuring the difference between the stop position of said object (8) and said reference position
as said object (8) is moved to said target position and for outputting a digital signal based thereon; and
memory means (3) for storing the output of said measuring means (16,17) as first data and other data relating to numerical control operations;
said control means (2) receiving said first data from said memory means (3) and a digital output signal of said position register (4) and calculating a positional error of said object (8) as the difference between said target position and said stop position calculated from the output of said measuring means (16,17) stored in said memory means (3) and the contents of said position register (4), and
controlling said memory means (3) to re-write the other data in said memory means (3) in accordance with the positional error of said object (8) calculated.

2. A numerical control equipment, comprising:
a table (7) for holding an object (8) to be measured;
measuring means (16,17) including a measuring head (16) for measuring the difference between a stop position of said measuring means (16,17) and said object (8) at a reference position on said table (7) as said measuring means (16,17) is moved to a target position and for outputting a digital signal based thereon;
drive means (10) for driving said measuring means (16,17);
control means (2) for providing movement instructions to said drive means (10) in order to move said measuring means (16,17) to said target position;
a position sensor (11,12) for detecting the position of said measuring means (16,17);
a position register (4) for receiving a detection signal from said position sensor (11,12);
memory means (3) for storing the output of said measuring means (16,17) as first data and other data relating to numerical control operations;
said control means (2) receiving said first data from said memory means (3) and a digital output signal of said position register (4) and calculating a positional error of said object (8) as the difference between said target position and said stop position calculated from the output of said measuring means (16,17) stored in said memory means (3) and the contents of said position register (4); and
controlling said memory means (3) to re-write the other data in said memory means (3) in accordance with the positional error of said object (8) calculated.

3. An equipment as claimed in claim 1 or 2, wherein said measurement result is applied to a display unit (14) and a printer (15).

4. An equipment as claimed in claim 1 or 2, wherein said measuring head (16) is a contact type measuring head comprising a potentiometer provided in a dial indicator.

5. An equipment as claimed in claim 1 or 2, wherein said measuring head (16) is a non-touch type measuring head.

6. An equipment as claimed in claim 5, wherein said non-touch measuring head is a distance sensor utilizing electromagnetic induction.

7. An equipment as claimed in claim 1 or 2, wherein said measuring head (16) provides digital outputs.

8. An equipment as claimed in claim 1 or 2, wherein said memory means (3) is positioned between said control means (2) and an input interface (5).

9. An equipment as claimed in claim 1 or 2, wherein said measuring means (16,17) includes an analogue to digital converter (17) for converting analog outputs of said measuring head (16) to digital signals, said digital signals being stored by said memory means.

## Patentansprüche

1. Numerische Steuereinheit, bestehend aus:
einem Tisch (7) zur Halterung eines zu messenden Objekts (8);
einer Antriebsvorrichtung (10) zum Antrieb des Tisches (7);
einer Steuervorrichtung zur Erteilung von Bewegungsbefehlen an die Antriebsvorrichtung (10), um das Objekt (8) auf dem Tisch (7) in eine Zielposition zu bewegen;
einer Lagemeßeinrichtung (11, 12) zur Feststellung der Lage des Tisches (7); und
einem Positionsregister (4) zum Empfang eines Meßsignals von der Lagemeßeinrichtung (11, 12);
einer Meßvorrichtung (16, 17) einschließlich eines in einer Vergleichsposition befestigten Meßkopfes, mit dem die Differenz zwischen der Endposition des Objekts (8) und der Vergleichsposition gemessen wird,
während das Objekt (8) zur Zielposition bewegt wird und zur Ausgabe eines diesbezüglichen digitalen Signals und einem Speichermittel (3) zur Speicherung der Ausgabe der Meßvorrichtung (16, 17) als erste Daten sowie weiteren Daten, die sich auf die numerischen Steuervorgänge beziehen;
der Steuervorrichtung (2), die die ersten Daten aus dem Speichermittel (3) sowie ein digitales Ausgangssignal aus dem Positionsregister (4) aufnimmt und einen Positionsfehler des Objekts (8) als Differenz zwischen der Zielposition und der Endposition berechnet, die aus der in dem Speichermittel (3) gespeicherten Ausgabe der Meßvorrichtung (16, 17) und dem Inhalt des Positionsregisters berechnet wird und der Steuerung des Speichermittels (3) zur erneuten Aufzeichnung der anderen Daten in dem Speichermittel (3) entsprechend dem berechneten Positionsfehler des Objekts (8).

2. Numerische Steuereinheit, bestehend aus:
einem Tisch (7) zur Halterung eines zu messenden Objekts (8);
einer Meßvorrichtung (16, 17) einschließlich eines Meßkopfes, mit der die Differenz zwischen der Endposition der Meßvorrichtung (16, 17) und dem Objekt (8) an einer Vergleichsposition auf dem Tisch (7) gemessen wird, während die Meßvorrichtung (16, 17) zu einer Zielposition bewegt wird und zur Ausgabe eines darauf beruhenden digitalen Signals;
einer Antriebsvorrichtung (10) zum Antrieb der Meßvorrichtung (16, 17);
einer Steuervorrichtung zur Erteilung von Bewegungsbefehlen an die Antriebsvorrichtung (10), um die Meßvorrichtungen (16, 17) in die Zielposition zu bewegen;
einer Lagemeßeinrichtung (11, 12) zur Feststellung der Position der Meßvorrichtung (16, 17); und
einem Positionsregister (4) zum Empfang eines Meßsignals von der Lagemeßeinrichtung (11, 12);
einem Speichermittel (3) zur Speicherung der Ausgabe der Meßvorrichtung (16, 17) als erste Daten sowie weiteren Daten, die sich auf die numerischen Steuervorgänge beziehen;
der Steuervorrichtung (2), die die ersten Daten aus dem Speichermittel (3) sowie ein digitales Ausgangssignal aus dem Positionsregister (4) aufnimmt und einen Positionsfehler des Objekts (8) als Differenz zwischen der Zielposition und der Endposition berechnet, die aus der in dem Speichermittel (3) gespeicherten Ausgabe der Meßvorrichtung (16, 17) und dem Inhalt des Positionsregisters berechnet wird, und der Steuerung des Speichermittels (3) zur erneuten Aufzeichnung der anderen Daten in dem Speichermittel (3) entsprechend dem berechneten Positionsfehler des Objekts (8).

3. Vorrichtung nach Anspruch 1 oder 2, bei der das Meßergebnis zu einer Sichtanzeige (14) und einem Drucker (15) weitergeleitet wird.

4. Vorrichtung nach Anspruch 1 oder 2, bei der der Meßkopf (16) ein Kontaktmeßkopf ist, der aus einem Potentiometer in einem Feinzeiger besteht.

5. Vorrichtung nach Anspruch 1 oder 2, bei der der Meßkopf (16) ein berührungsloser Meßkopf ist.

6. Vorrichtung nach Anspruch 1 oder 2, bei der der berührungslose Meßkopf ein Entfernungssensor ist, der die elektromagnetische Induktion ausnutzt.

7. Vorrichtung nach Anspruch 1 oder 2, bei der der Meßkopf (16) digitale Ausgaben liefert.

8. Vorrichtung nach Anspruch 1 oder 2, bei der sich das Speichermittel (3) zwischen der Steuervorrichtung (2) und einer EingabeSchnittstelle (5) befindet.

9. Vorrichtung nach Anspruch 1 oder 2, bei der die Meßvorrichtung (16, 17) ein AnalogDigitalWandler (17) ist, mit dem die analogen Ausgaben des Meßkopfes (16) in digitale Signale umgewandelt werden, wobei die Digitalsignale in dem Speichermittel gespeichert werden.

## Revendications

1. Installation de commande numérique, comprenant:
une table (7) destinée à tenir un objet (8) devant être mesuré;
des moyens d'entraînement (10) destinés à entraîner ladite table (7);
des moyens de commande (2) destinés à transmettre des instructions de déplacement auxdits moyens d'entraînement (10) de façon à déplacer ledit objet (8) sur ladite table (7) vers une position-cible;
un capteur de position (11, 12) destiné à détecter la position de ladite table (7); et
un registre de position (4) destiné à recevoir un signal de détection provenant dudit capteur de position (11, 12);
des moyens de mesurage (16, 17) comprenant une tête de mesurage (16) fixée dans une position de référence destinée à mesurer la différence entre la position d'arrêt dudit objet (8) et ladite position de référence lorsque ledit objet (8) est déplacé vers ladite position-cible, et à délivrer un signal numérique basé sur elle; et
des moyens de mémoire (3) destinés à enregistrer la sortie desdits moyens de mémoire (16, 17) comme premières données et autres données relatives aux opérations de commande numérique;
lesdits moyens de commande (2) recevant lesdites premières données provenant desdits moyens de mémoire (3) et un signal de sortie numérique provenant dudit registre de position (4) et calculant une erreur de position dudit objet (8) comme étant la différence entre ladite position-cible et ladite position d'arrêt calculée à partir de la sortie desdits moyens de mesurage (16, 17) enregistrée dans lesdits moyens de mémoire (3) et du contenu dudit registre de position (4), et
commandant auxdits moyens de mémoire (3) de réécrire les autres données dans lesdits moyens de mémoire (3) conformément à l'erreur de position calculée dudit objet (8).

2. Installation de commande numérique, comprenant:
une table (7) destinée à tenir un objet (8) devant être mesuré;
des moyens de mesurage (16, 17) comprenant une tête de mesurage (16) destinée à mesurer la différence entre la position d'arrêt desdits moyens de mesurage (16, 17) et dudit objet (8) dans une position de référence sur ladite table (7) lorsque lesdits moyens de mesurage (16, 17) sont déplacés vers une position-cible et destinés à délivrer un signal numérique basé elle ;
des moyens d'entraînement (10) destinés à entraîner lesdits moyens de mesurage (16, 17);
des moyens de commande (2) destinés à transmettre des instructions de déplacement auxdits moyens d'entraînement (10) de façon à déplacer lesdits moyens de mesurage (16, 17) vers la position-cible;
un capteur de position (11, 12) destiné à détecter la position desdits moyens de mesurage (16, 17);
un registre de position (4) destiné à recevoir un signal de détection provenant dudit capteur de position (11, 12);
des moyens de mémoire (3) destinés à enregistrer la sortie desdits moyens de mesurage (16, 17) comme premières données et autres données relatives aux opérations de commande numérique;
lesdits moyens de commande (2) recevant lesdites premières données provenant desdits moyens de mémoire (3) et un signal de sortie numérique provenant dudit registre de position (4) et calculant une erreur de position dudit objet (8) comme étant la différence entre ladite position-cible et ladite position d'arrêt calculée à partir de la sortie desdits moyens de mesurage (16, 17) enregistrée dans lesdits moyens de mémoire (3) et du contenu dudit registre de position (4); et
commandant auxdits moyens de mémoire (3) de réécrire les autres données dans lesdits moyens de mémoire (3) conformément à l'erreur de position calculée dudit objet (8).

3. Installation selon la revendication 1 ou 2, dans laquelle ledit résultat de mesure est appliqué à une unité d'affichage (14) et à une imprimante (15).

4. Installation selon la revendication 1 ou 2, dans laquelle ladite tête de mesurage (16) est une tête de mesurage du type à contact comprenant un potentiomètre prévu dans un indicateur à cadran.

5. Installation selon la revendication 1 ou 2, dans laquelle ladite tête de mesurage (16) est une tête de mesurage du type sans contact.

6. Installation selon la revendication 5, dans laquelle la tête de mesurage sans contact est un capteur de distance utilisant l'induction électromagnétique.

7. Installation selon la revendication 1 ou 2, dans laquelle ladite tête de mesurage (16) transmet des sorties numériques.

8. Installation selon la revendication 1 ou 2, dans laquelle lesdits moyens de mémoire (3) sont positionnés entre lesdits moyens de commande (2) et une interface de sortie (5).

9. Installation selon la revendication 1 ou 2, dans laquelle lesdits moyens de mesurage (16, 17) comprennent un convertisseur analogique-numérique (17) destiné à convertir des sorties analogiques de ladite tête de mesurage (16) en signaux numériques, lesdits signaux numériques étant enregistrés par lesdits moyens de mémoire.
